# EUROPÄISCHE PATENTSCHRIFT

(11) **EP 2 033 824 B1**
(45) Veröffentlichungstag und Bekanntmachung des Hinweises auf die Patenterteilung: **26.10.2011**
(21) Anmeldenummer: 08014823.2
(22) Anmeldetag: 21.08.2008
(51) Int. Cl.: B60J 1/18

(54) **Cabrioletfahrzeug**
Convertible vehicle
Véhicule cabriolet

(30) Priorität: 06.09.2007 DE 102007042303
(43) Veröffentlichungstag der Anmeldung: 11.03.2009
(73) Patentinhaber: Wilhelm Karmann GmbH, 49084 Osnabrück (DE)
(72) Erfinder: Hilbk, Holger, 49201 Dissen (DE); Wesemann, Michael, 49565 Bramsche (DE)
(74) Vertreter: Kronthaler, Schmidt & Coll.

(56) Entgegenhaltungen:
- EP-A- 1 164 040
- EP-A- 1 164 041
- WO-A-2004/035337
- DE-U1-202006 001 230

## Beschreibung

Die Erfindung betrifft ein Cabrioletfahrzeug mit einem Fahrzeugaufbau und einem an diesem bewegbar gelagerten Falt- oder Klappverdeck, welches einen Heckscheibenrahmen mit einer gegenüber diesem verschiebbaren und zumindest bereichsweise transparenten Heckscheibe aufweist.

Ein solches Cabrioletfahrzeug wird beispielsweise in der WO 2004/035337 beschrieben.

Die DE 102 00 221 B4 offenbart ein Verdeck für ein Cabriolet-Fahrzeug, umfassend einen mit einem Verdeckgestänge verbundenen Heckscheibenrahmen. Eine Heckscheibe ist in einem karosseriefest mit dem Cabriolet-Fahrzeug verbundenen Gehäuse gehaltert und mittels eines Antriebs und einer Führungsschiene relativ zu dem Gehäuse bewegbar. Die Heckscheibe greift in einem geschlossenen Verdeckzustand zumindest in der hochgefahrenen Heckscheibenstellung in eine nutartige Ausnehmung des Heckscheibenrahmens ein.

Wegen des Übergangs in der Heckscheibenführung zwischen dem karosseriefesten Gehäuse und dem gegenüber der Karosserie bewegbaren Heckscheibenrahmen, müssen die Führungen von dem Gehäuse und von dem Heckscheibenrahmen bei der Fertigung und bei der Montage sehr genau aufeinander abgestimmt werden, was aufwändig ist und zu erhöhten Kosten führt.

Ausgehend von diesem Stand der Technik liegt der Erfindung die Aufgabe zugrunde, ein Fahrzeug der eingangs genannten Art derart weiterzubilden, dass in der Bewegungsbahn der Heckscheibe kein Übergang zwischen dem Fahrzeugaufbau und dem Heckscheibenrahmen auftritt.

Diese Aufgabe wird erfindungsgemäß mit einem Cabriolet-fahrzeug nach Anspruch 1 gelöst. Bevorzugte Weiterbildungen sind in den Unteransprüchen gegeben.

Das erfindungsgemäße Cabrioletfahrzeug, insbesondere Cabrioletkraftfahrzeug, weist einen Fahrzeugaufbau und ein an diesem bewegbar gelagertes Falt- oder Klappverdeck auf, welches einen Heckscheibenrahmen mit einer gegenüber diesem verschiebbaren und zumindest bereichsweise transparenten Heckscheibe umfasst, wobei die Heckscheibe an dem Heckscheibenrahmen mittels einer Mechanik geführt ist, die der Heckscheibe relativ zum Heckscheibenrahmen einen Kurzhub sowie ein anschließendes Bewegen, insbesondere Verschwenken, nach außen oben ermöglicht. Bevorzugt wird die Heckscheibe bei ihrer Öffnungsbewegung außen über das Verdeck geschoben oder gefahren, insbesondere in einer Richtung von einem Heckbereich des Fahrzeugs weg, schräg noch vorne oben. Der Kurzhub dient bevorzugt dazu, die Heckscheibe von einer Dichtung zu lösen bzw. aus einer Dichtung zu fahren.

Zum Öffnen der Heckscheibe ist somit ihr Überführen in ein karosseriefestes Gehäuse nicht mehr erforderlich.

Der Ausdruck "vorne" kennzeichnet dabei insbesondere die gewöhnliche Fahrrichtung bzw. die Längsrichtung des Fahrzeugs. Ferner kennzeichnet der Ausdruck "oben" insbesondere eine Richtung in oder parallel zur Fahrzeughochachse des Fahrzeugs.

Die Mechanik kann eine kombinierte Kulissen-Lenkerführung oder eine reine Lenkermechanik umfassen. Bevorzugt weist die Mechanik aber wenigstens ein Kulissenführungspaar und wenigstens einen Gleiter auf, wobei die Heckscheibe durch den wenigstens einen mittels des an dem Heckscheibenrahmen befestigten Kulissenführungspaars geführten und mit der Heckscheibe gekoppelten Gleiter mit dem Heckscheibenrahmen verbunden ist, welches Kulissen mit in Kulissenlängsrichtung versetztem und/oder zumindest bereichsweise unterschiedlichem Bahnverlauf aufweist. Dabei ist der Gleiter insbesondere zwischen den Kulissen des Kulissenführungspaars angeordnet.

Wegen des in Kulissenlängsrichtung versetzten und/oder unterschiedlichen Verlaufs der Bahnen des Kulissenführungspaars ist es möglich, die Heckscheibe zumindest bereichsweise von dem Heckscheibenrahmen abzuheben und danach bzw. währenddessen zu verschieben. Insbesondere erfolgt der Vorgang des Abhebens zunächst an einem oberen oder vorderen Ende der Heckscheibe, während deren unteres oder hinteres Ende eine geradlinige oder im Wesentlichen geradlinige Bewegung ausführt. Der Kurzhub kann vor oder während des Abhebens des oberen Endes der Heckscheibe erfolgen und ist bevorzugt Teil der geradlinigen oder im Wesentlichen geradlinigen Bewegung des unteren Endes der Heckscheibe. Insbesondere stellt der Kurzhub den ersten Teil der Bewegung dar. Nach seiner geradlinigen oder im Wesentlichen geradlinigen Bewegung kann auch das untere Ende der Heckscheibe von dem Heckscheibenrahmen abgehoben und die Heckscheibe von außen über das Verdeck geschoben werden. Ferner führt die Anordnung des Gleiters zwischen den beiden Kulissen zu einer platzsparenden Ausbildung der Mechanik, wobei die beiden Kulissen in Fahrzeugquerrichtung insbesondere nebeneinander angeordnet sind.

Der Gleiter ist verschiebbar an jeder der beiden Kulissen des Kulissenführungspaars geführt. Zusätzlich ist der Gleiter insbesondere schwenkbar an einer oder an jeder der beiden Kulissen des Kulissenführungspaars geführt. Ferner kann der Gleiter an der Heckscheibe angelenkt sein. Bevorzugt ist der Gleiter aber starr mit der Heckscheibe verbunden. Die Lagerungsorte, in denen der Gleiter an den beiden Kulissen des Kulissenführungspaars geführt ist, weisen in Kulissenlängsrichtung bzw. in Bewegungsrichtung der Heckscheibe insbesondere einen Versatz zueinander auf.

Die Heckscheibe kann im Abstand zu dem Gleiter mittels wenigstens einer zusätzlichen Kulissenführung geführt sein, deren Kulisse an dem Heckscheibenrahmen befestigt ist. Die zusätzliche Kulissenführung kann z.B. ein Andrücken der Heckscheibe an eine Dichtung begünstigen, wenn die Heckscheibe geschlossen wird, und ist insbesondere im oberen Bereich des Heckscheibenrahmens vorgesehen.

Im Heckbereich des Fahrzeugaufbaus ist bevorzugt ein Heckdeckel angelenkt, der insbesondere zur Abdeckung eines in dem Fahrzeugaufbau vorgesehenen Stauraums dient. Dabei kann die Heckscheibe in ihrem geschlossenem Zustand unter Zwischenschaltung einer Dichtung an dem Heckdeckel und/oder an einem Wasserkanal anliegen. Bevorzugt erfährt die Heckscheibe vor dem Öffnen des Heckdeckels einen Kurzhub, sodass die Heckscheibe von der Dichtung getrennt bzw. aus der Dichtung gefahren wird. Hierdurch können mögliche Kollisionen beim Öffnen des Heckdeckels vermieden werden. Der Kurzhub wird insbesondere mittels der Mechanik realisiert und verläuft bevorzugt geradlinig oder im Wesentlichen geradlinig, insbesondere vom Heckbereich weg. Ferner kann der Kurzhub erfolgen, wenn das Dach in den Stauraum oder in einen Verdeckkasten abgelegt werden soll.

Gemäß einer ersten Variante ist unter dem Heckdeckel der Wasserkanal vorgesehen, in den die Heckscheibe in ihrem geschlossenem Zustand eingreift. In diesem Fall erstreckt sich die Heckscheibe in ihrem geschlossenem Zustand bis unter den geschlossenen Heckdeckel und wird dort mittels der Dichtung gedichtet. In diesem Zustand der Heckscheibe sind weder der Wasserkanal noch die Dichtung nach außen sichtbar. Da sich die Heckscheibe im geschlossenen Zustand bis unter den Heckdeckel erstreckt, ist die Mechanik zur Heckscheibenführung insbesondere derart ausgelegt, dass zum Öffnen der Heckscheibe zunächst im unteren Bereich der Heckscheibe eine gradlinige oder nahezu geradlinige Aushubbewegung erzeugt wird.

Gemäß einer zweiten Variante liegt die Heckscheibe unter Zwischenschaltung der Dichtung auf dem Heckdeckel auf, sodass der Heckdeckel weiter in die Tiefe geht. Hierbei kann die Heckscheibe zum Öffnen gleich nach hinten weggeschwenkt werden, ohne zuvor eine gradlinige Bewegung zu vollziehen.

Die Heckscheibe kann manuell in den geöffneten Zustand überführt werden. Bevorzugt ist aber ein Stellglied oder Antrieb vorgesehen, mittels welchem die Heckscheibe automatisch geöffnet und/oder wieder geschlossen werden kann. Der Antrieb ist z.B. mittig am Heckscheibenrahmen positioniert und bevorzugt als Elektromotor ausgebildet. Ferner kann der Antrieb über wenigstens ein Bürstenkabel bzw. Steigungsseil, wenigstens eine zahnstange und/oder wenigstens ein anderes mechanisches Koppelglied mit der Heckscheibe und/oder mit dem wenigstens einen Gleiter verbunden sein.

Im geschlossenem Zustand kann die Heckscheibe an dem Heckscheibenrahmen verriegelt sein. Dabei ist die verriegelung ähnlich oder analog zu einer verriegelung ausbilbar, die zum Verriegeln einer Dachspitze an einem Windschutzscheibenrahmen verwendet wird.

Mit der erfindungsgemäßen Mechanik wird erreicht, dass der untere Teil der Heckscheibe, zumindest zu Beginn der Öffnungsbewegung, eine überwiegend geradlinige Bewegung ausführt und so aus der Dichtung und aus dem Wasserkanal herausfahren kann, ohne dass es zu Kollisionen kommt. Der obere Teil der Heckscheibe hingegen vollführt eine Bewegung nach außen, sodass dieser Teil nicht mit dem Verdeck bzw. mit dem Verdeckbezug kollidiert. Im geschlossenem Zustand der Heckscheibe kann deren obere Heckscheibenkante bündig zur Verdeckaußenhaut liegen.

Bevorzugt weist die Mechanik wenigstens ein zweites Kulissenführungspaar und wenigstens einen zweiten Gleiter auf, wobei die Heckscheibe durch den wenigstens einen mittels des an dem Heckscheibenrahmen befestigten zweiten Kulissenführungspaars geführten und mit der Heckscheibe gekoppelten zweiten Gleiter mit dem Heckscheibenrahmen verbunden ist, welches Kulissen mit in Kulissenlängsrichtung versetztem und/oder zumindest bereichsweise unterschiedlichem Bahnverlauf aufweist. Dabei ist der zweite Gleiter insbesondere zwischen den Kulissen des zweiten Kulissenführungspaars angeordnet.

Der zweite Gleiter ist verschiebbar an jeder der beiden Kulissen des zweiten Kulissenführungspaars geführt. Zusätzlich ist der zweite Gleiter insbesondere schwenkbar an einer oder an jeder der beiden Kulissen des zweiten Kulissenführungspaars geführt. Ferner kann der zweite Gleiter an der Heckscheibe angelenkt sein. Bevorzugt ist der zweite Gleiter aber starr mit der Heckscheibe verbunden. Die Lagerungsorte, in denen der zweite Gleiter an den beiden Kulissen des zweiten Kulissenführungspaars geführt ist, weisen in Kulissenlängsrichtung bzw. in Bewegungsrichtung der Heckscheibe insbesondere einen Versatz zueinander auf.

Die Heckscheibe kann im Abstand zu dem zweiten Gleiter mittels wenigstens einer zusätzlichen zweiten Kulissenführung geführt sein, deren Kulisse an dem Heckscheibenrahmen befestigt ist, insbesondere in dessen oberen Bereich.

Die beiden Kulissenführungspaare sind bevorzugt an einander gegenüberliegenden Seiten des Heckscheibenrahmens angeordnet und verlaufen insbesondere netzparallel. Somit ist es möglich, die Heckscheibe beidseitig an dem Heckscheibenrahmen zu führen.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht eines Fahrzeugs gemäß einer Ausführungsform der Erfindung,
- Fig. 2: eine Seitenansicht des Heckscheibenrahmens nach Fig. 1 ohne Verdeckbezug und bei geschlossener Heckscheibe,
- Fig. 3: die Ansicht nach Fig. 2 nach einem Kurzhub der Heckscheibe relativ zum Heckscheibenrahmen,
- Fig. 4: die Ansicht nach Fig. 2 im teilweise geöffneten Zustand der Heckscheibe,
- Fig. 5: eine perspektivische Hinteransicht des Verdecks ohne Verdeckbezug im geschlossenen Zustand der Heckscheibe,
- Fig. 6: die Ansicht nach Fig. 5 im geöffneten Zustand der Heckscheibe,
- Fig. 7: eine andere perspektivische Ansicht des Verdecks ohne Verdeckbezug bei geöffneter Heckscheibe,
- Fig. 8: eine perspektivische hintere Teilansicht des Verdecks bei geöffneter Heckscheibe,
- Fig. 9: eine perspektivische Unteransicht des Heckscheibenrahmens bei geschlossener Heckscheibe,
- Fig. 10: die Ansicht nach Fig. 9 bei geöffneter Heckscheibe,
- Fig. 11: eine perspektivische Ansicht eines an dem Heckscheibenrahmen befestigten Kulissenführungspaars,
- Fig. 12: eine andere perspektivische Ansicht des Kulissenführungspaars nach Fig. 11,
- Fig. 13: eine Seitenansicht der Kulissen des Kulissenführungspaars nach Fig. 11 und
- Fig. 14: eine weitere perspektivische Ansicht des Kulissenführungspaars.

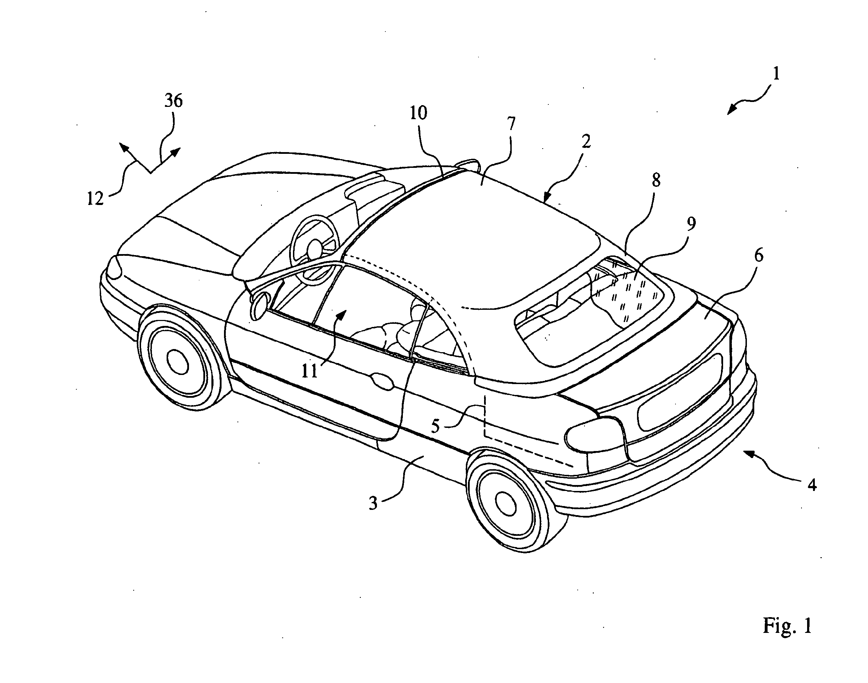

Aus Fig. 1 ist eine perspektivische Ansicht eines Fahrzeugs 1 gemäß einer Ausführungsform der Erfindung ersichtlich, wobei ein Falt- oder Klappverdeck 2 bewegbar an einem Fahrzeugaufbau 3 gelagert ist und im Heckbereich 4 des Fahrzeugs 1 in einem Stauraum 5 abgelegt werden kann. Der Stauraum 5 ist mittels eines Heckdeckels 6 abgedeckt, der schwenkbar am Fahrzeugaufbau 3 angelenkt ist. Das mit einem Verdeckbezug 7 bespannte Verdeck 2 weist einen Heckscheibenrahmen 8 mit einer Heckscheibe 9 auf und ist im geschlossenem Zustand dargestellt. Dabei erstreckt sich das Verdeck 2 von einem Windschutzscheibenrahmen 10 bis zu dem Heckdeckel 6 und deckt einen in dem Fahrzeugaufbau 3 vorgesehenen Insassenraum 11 ab. Die Vorwärtsfahrtrichtung des Fahrzeugs 1 bzw. die Fahrzeuglängsrichtung ist mit dem Pfeil 12 und die Fahrzeugquerrichtung mit dem Pfeil 36 gekennzeichnet.

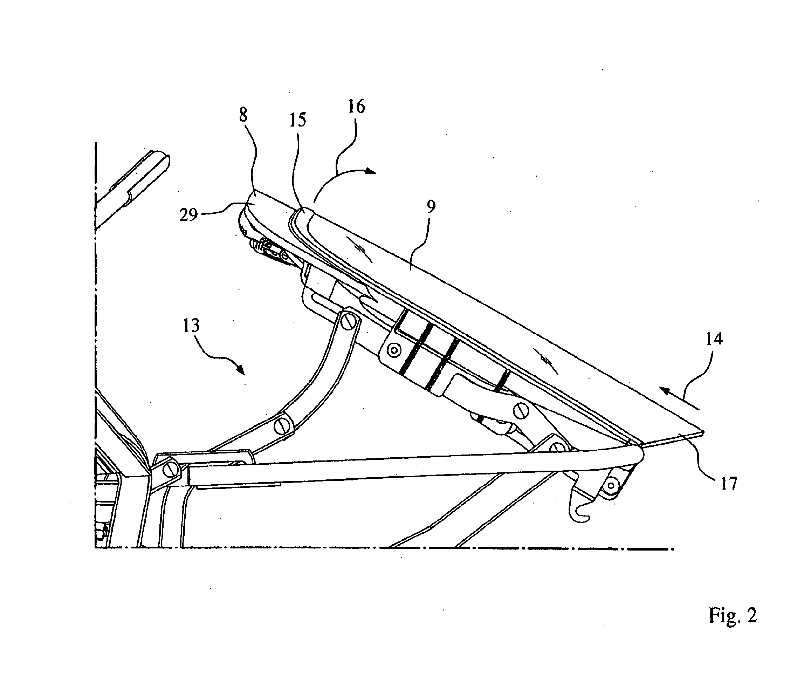

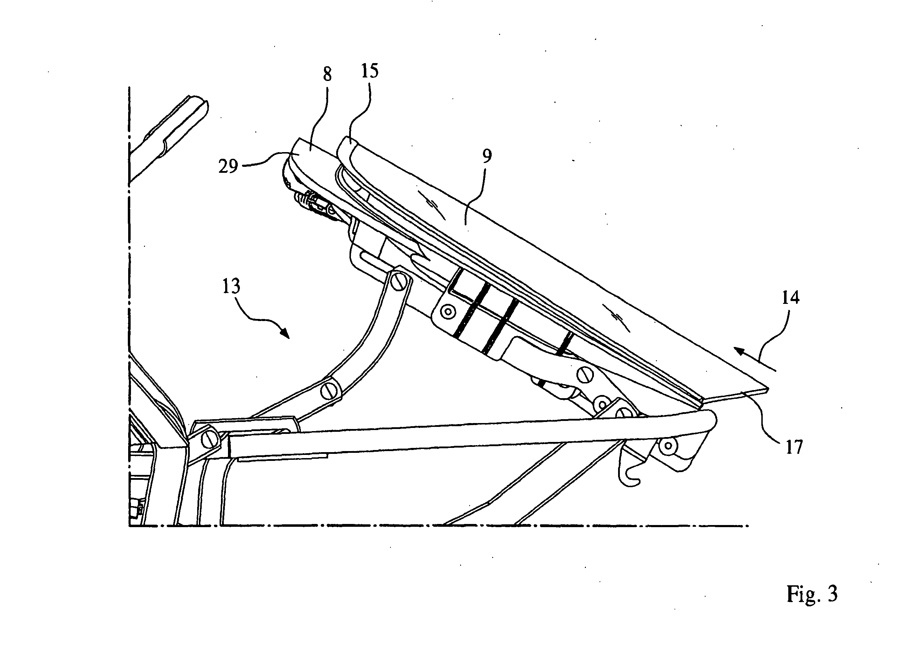

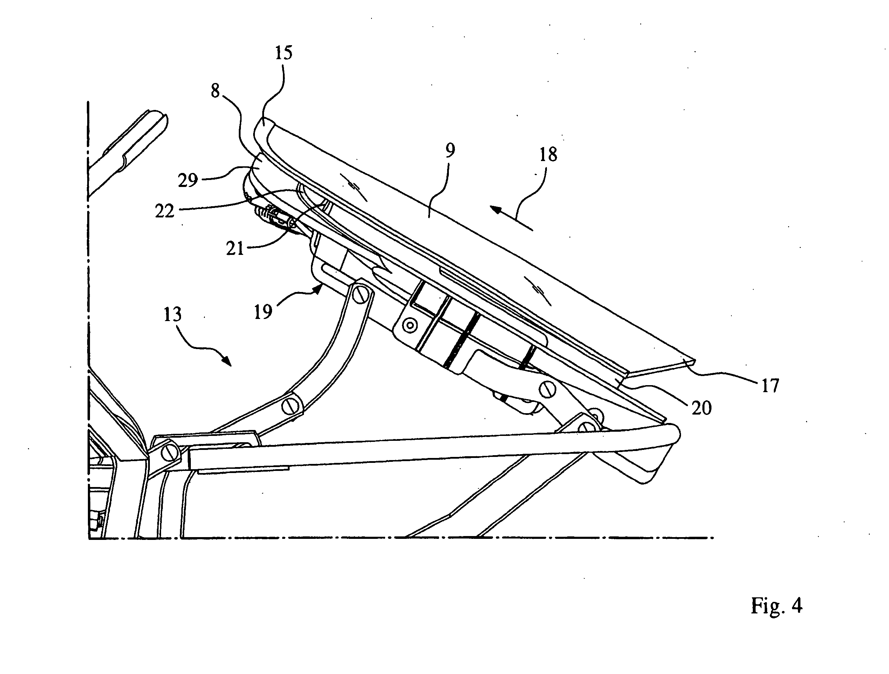

Aus Fig. 2 ist eine Seitenansicht des Heckscheibenrahmens 8 unter Weglassen des Verdeckbezugs 7 ersichtlich, wobei die Heckscheibe 9 in ihrem geschlossenem Zustand dargestellt ist. Ferner ist der Heckscheibenrahmen 8 mittels eines Verdeckgestänges 13 an dem Fahrzeugaufbau 3 gelagert. Zum Öffnen der Heckscheibe 9 führt diese zunächst einen Kurzhub in Richtung des Pfeils 14 aus. Währenddessen oder anschließend wird der dem Heckdeckel 6 abgewandte Endbereich 15 der Heckscheibe 9 nach außen in Richtung des Pfeils 16 von dem Heckscheibenrahmen 8 weggeschwenkt und der dem Heckdeckel 6 zugewandten Endbereich 17 der Heckscheibe 9 geradlinig oder im Wesentlichen geradlinig in Richtung des Pfeils 14 bewegt, was aus Fig. 3 ersichtlich ist. Danach wird der Endbereich 17 vom Heckscheibenrahmen 8 abgehoben und die Heckscheibe 9 in Richtung des Pfeils 18 relativ zu dem Heckscheibenrahmen 8 verschoben. Die Heckscheibe 9 geht dabei zunächst in einen teilweise geöffneten Zustand über, den Fig. 4 zeigt.

Die Heckscheibe 9 ist beidseitig mittels jeweils eines Kulissenführungspaars 19 an dem Heckscheibenrahmen 8 geführt, wobei ein mit dem Kulissenführungspaar 19 zusammenwirkender Gleiter 20 fest mit der Heckscheibe 9 verbunden ist. Ferner ist die Heckscheibe 9 im Abstand zu dem Gleiter 20 mittels einer zusätzlichen Kulissenführung 21 an dem Heckscheibenrahmen 8 geführt. Die zusätzliche Kulissenführung 21 ist optional und kann weggelassen werden. Sie dient hier insbesondere dazu, die Heckscheibe 9 beim Schließen an eine am Heckscheibenrahmen 8 vorgesehene Dichtung 22 anzudrücken.

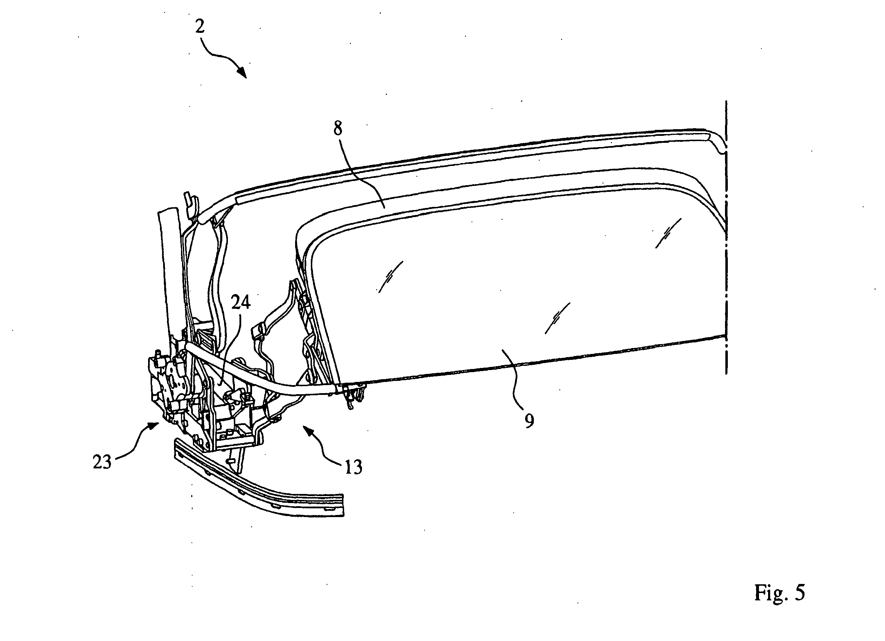

Aus Fig. 5 ist eine perspektivische hintere Teilansicht des Verdecks 2 ohne Verdeckbezug ersichtlich, wobei die Heckscheibe 9 im geschlossenem Zustand dargestellt ist. Das Verdeckgestänge 13 ist bewegbar an einem Hauptlager 23 gelagert, welches an dem Fahrzeugaufbau 3 befestigt ist. Ferner ist ein Antriebszylinder 24 zum Betätigen des Verdeckgestells 13 dargestellt.

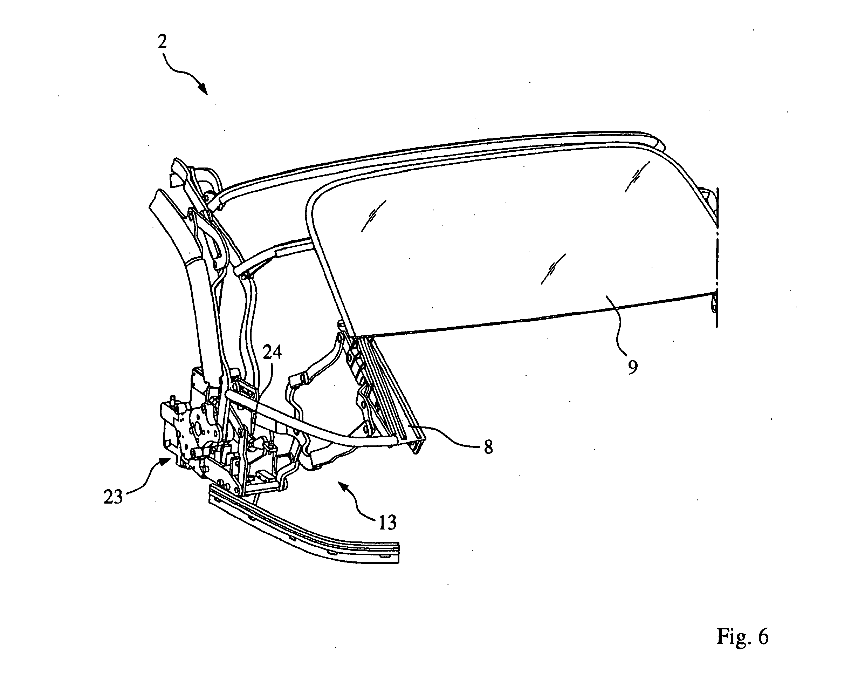

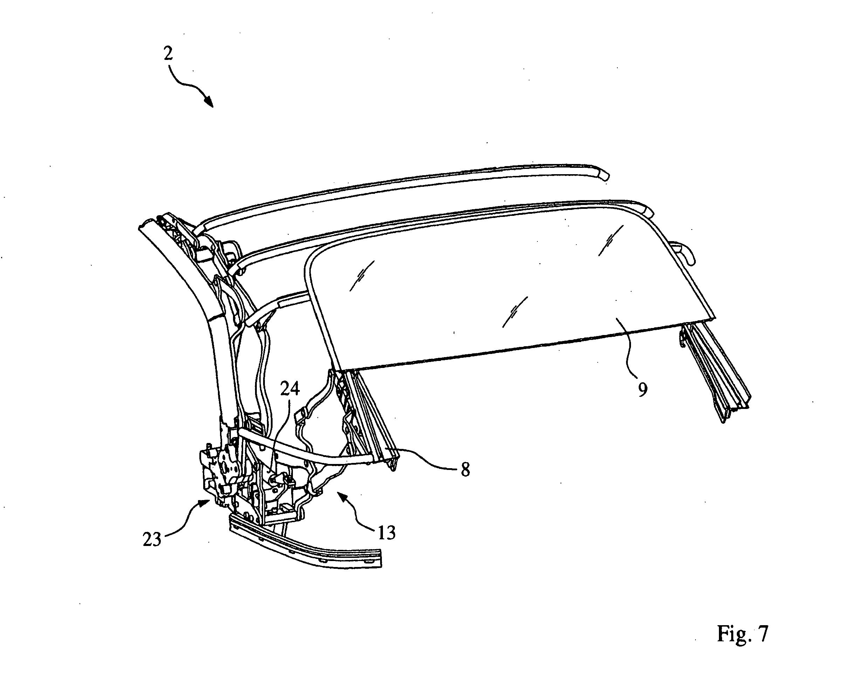

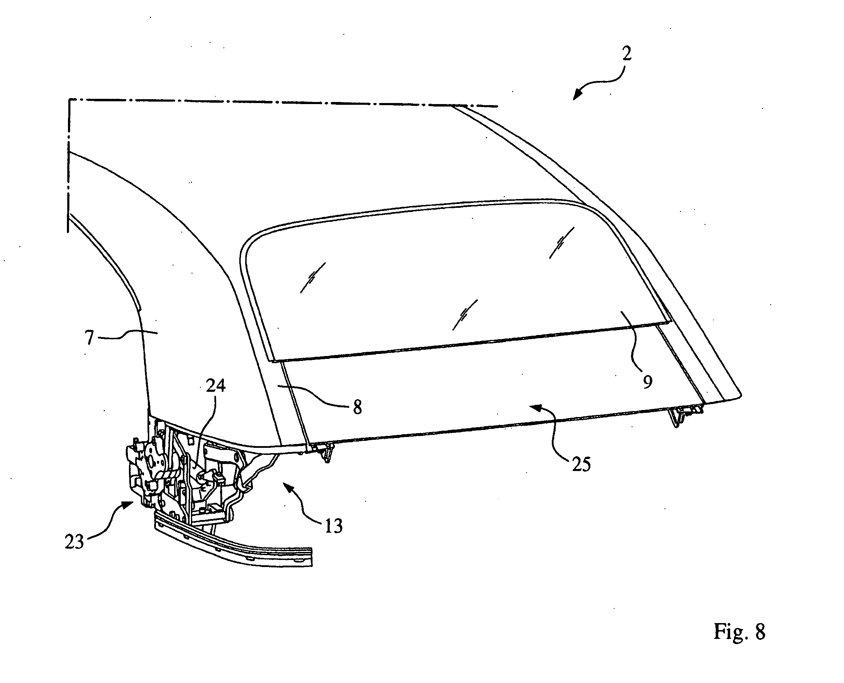

Fig. 6 und Fig. 7 zeigen perspektivische Teilansichten des Verdecks 2 ohne Verdeckbezug bei geöffneter Heckscheibe 9. Ferner ist aus Fig. 8 eine perspektivische Teilansicht des Verdecks 2 mit Verdeckbezug 7 bei geöffneter Heckscheibe 9 ersichtlich. Die Heckscheibe 9 gibt dabei eine Öffnung 25 frei, durch welche hindurch das Fahrzeug 1 beladen werden kann.

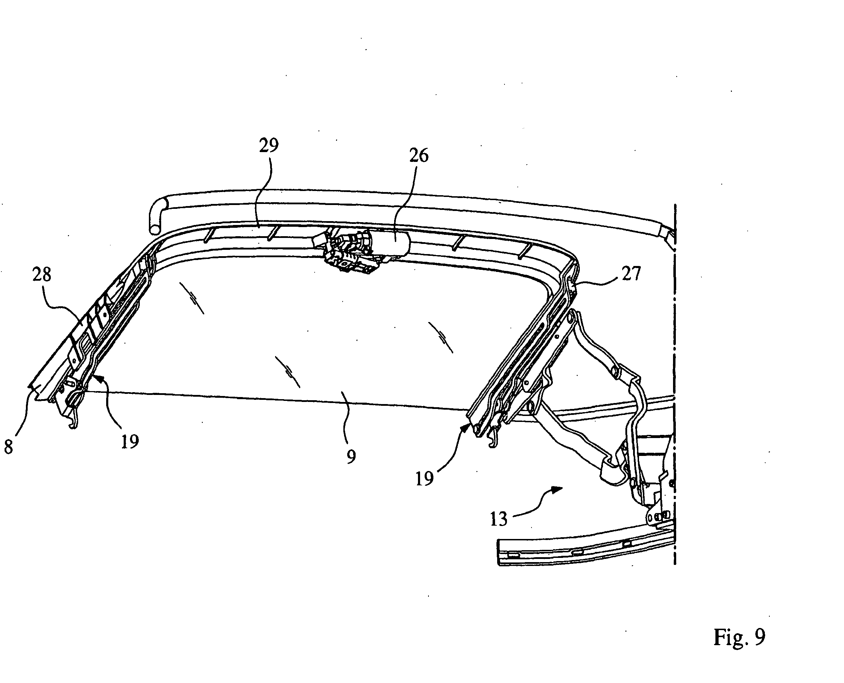

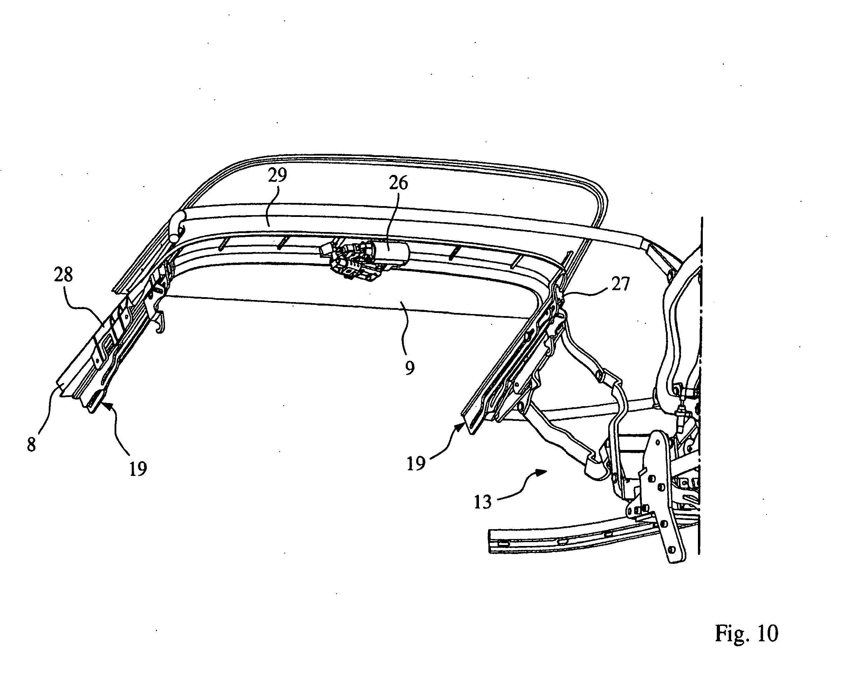

Aus Fig. 9 ist eine perspektivische Unteransicht des Heckscheibenrahmens 8 bei geschlossener Heckscheibe 9 ersichtlich, wobei ein Antrieb 26 an dem Heckscheibenrahmen 8 befestigt ist. Deutlich ist zu erkennen, dass der Heckscheibenrahmen 8 U-förmig ausgebildet ist, wobei der Antrieb 26 in der Mitte des die beiden Schenkel 27 und 28 des Heckscheibenrahmens 8 miteinander verbindenden Rückens 29 befestigt ist. Der Rücken 29 ist dabei auf der dem Heckdeckel 6 abgewandten Seite des Heckscheibenrahmens 8 angeordnet. Der Antrieb 26 ist als Elektromotor ausgebildet und wirkt mit den beiden Kulissenführungspaaren 19 zum Öffnen der Heckscheibe 9 zusammen. Die Unteransicht des Heckscheibenrahmens 8 bei geöffneter Heckscheibe 9 ist dabei aus Fig. 10 ersichtlich.

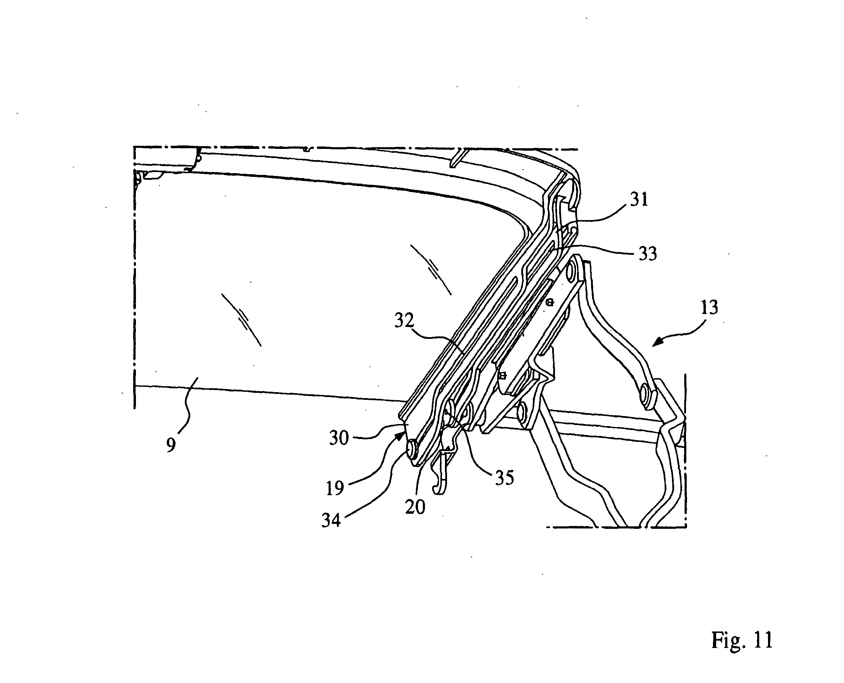

Fig. 11 zeigt eine perspektivische Ansicht eines der Kulissenführungspaare 19, welches eine erste Kulisse 30 und eine zweite Kulisse 31 aufweist, die jeweils eine Kulissenbahn 32 bzw. 33 umfassen, wobei die beiden Kulissenbahnen 32 und 33 zum Steuern des Bewegungsablaufs der Heckscheibe 9 einen unterschiedlichen Verlauf aufweisen. Der Gleiter 20 greift mit einem Bolzen 34 in die Kulissenbahn 32 und mit einem Bolzen 35 in die Kulissenbahn 33 ein.

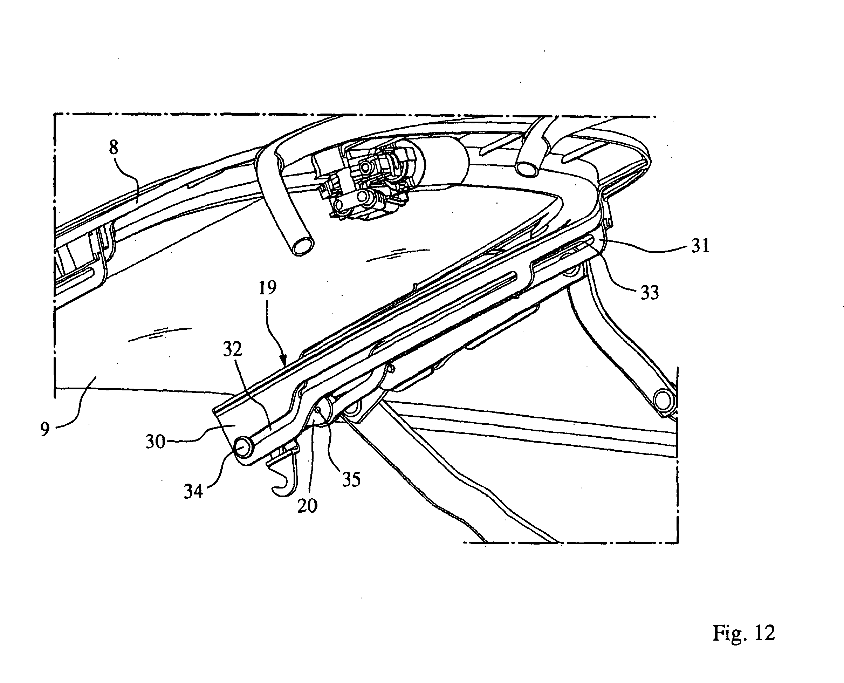

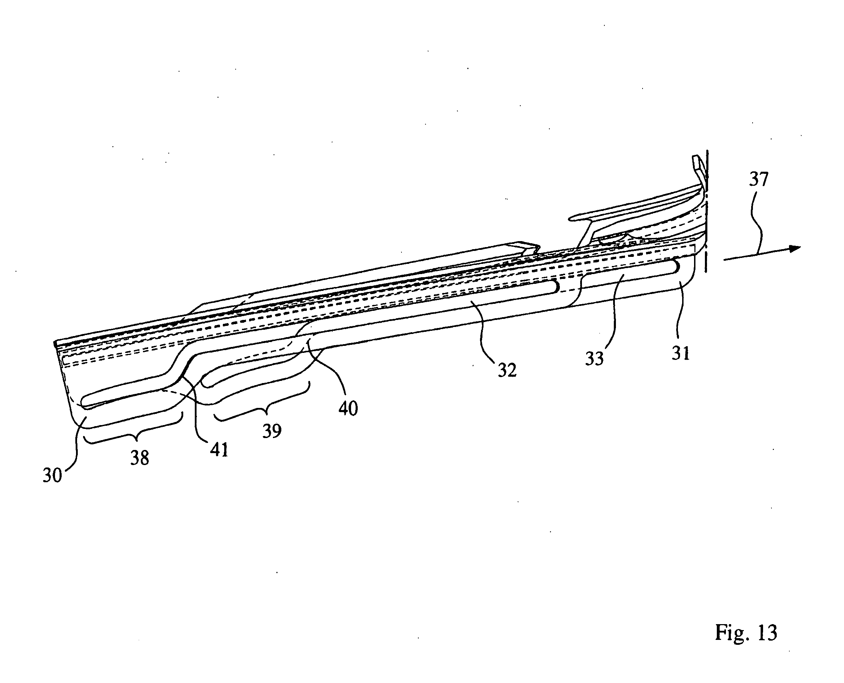

Aus Fig. 12 ist eine perspektivische, seitliche Ansicht auf das Kulissenführungspaar 19 gemäß Fig. 11 ersichtlich. Ferner zeigt Fig. 13 eine Seitenansicht der beiden parallel zueinander verlaufenden Kulissen 30 und 31 in isolierter Darstellung, aus der die unterschiedlichen Verläufe der Kulissenbahnen 32 und 33 erkennbar sind. Die beiden Bahnen 32 und 33 sind in Kulissenlängsrichtung 37 zueinander versetzt und weisen jeweils einen im Wesentlichen geraden heckbereichseitigen Endabschnitt 38 bzw. 39 auf, wodurch der Kurzhub und die geradlinige oder im Wesentlichen geradlinige Bewegung des unteren Endbereichs 17 der Heckscheibe 9 ermöglicht werden. Die Krümmung 40 der Bahn 33 dient zum Abheben des oberen Endbereichs 15 der Heckscheibe 9, wohingegen die Krümmung 41 der Bahn 32 zum Abheben des unteren Endbereichs 17 der Heckscheibe 9 dient.

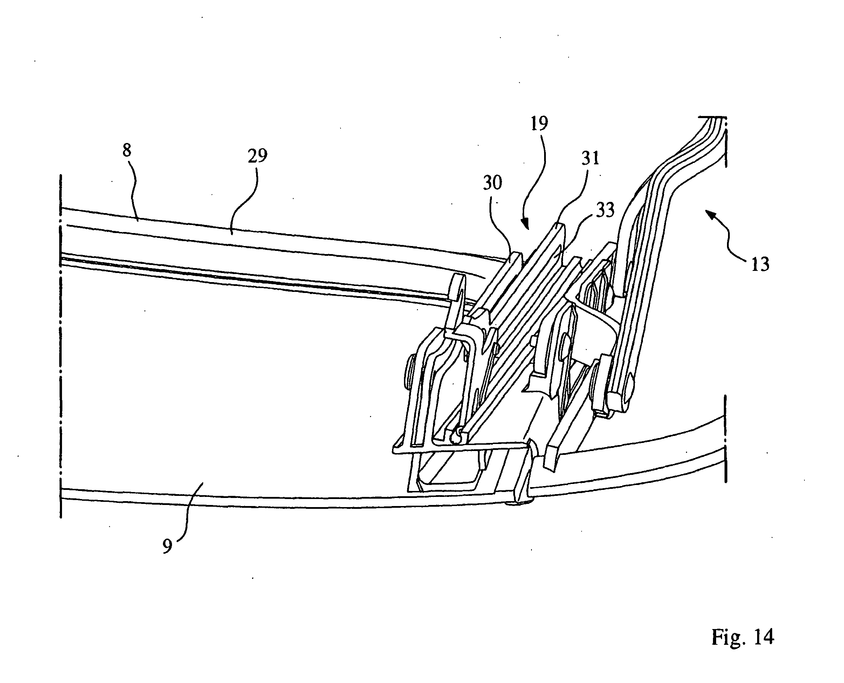

Fig. 14 zeigt eine zusätzliche perspektivische Ansicht des Kulissenführungspaars 19 gemäß Fig. 11.

## Patentansprüche

1. Cabrioletfahrzeug mit
einem Fahrzeugaufbau (3),
einem an diesem bewegbar gelagerten Falt- oder Klappverdeck (2), welches einen Heckscheibenrahmen (8) mit einer gegenüber diesem verschiebbaren und zumindest bereichsweise transparenten Heckscheibe (9) aufweist, **dadurch gekennzeichnet,**
**dass** die Heckscheibe (9) an dem Heckscheibenrahmen (8) mittels einer Mechanik (19, 20) geführt ist, die der Heckscheibe (9) relativ zum Heckscheibenrahmen (8) einen Kurzhub (14) und ein anschließendes Bewegen (18) nach außen oben ermöglicht.

2. Cabrioletfahrzeug nach Anspruch 1,
**dadurch gekennzeichnet,**
**dass** die Heckscheibe (9) außen über das Verdeck (2) geschoben werden kann.

3. Cabrioletfahrzeug nach Anspruch 1 oder 2,
**dadurch gekennzeichnet**,
die Heckscheibe (9) durch wenigstens einen mittels eines an dem Heckscheibenrahmen (8) befestigten Kulissenführungspaars (19) geführten und mit der Heckscheibe (9) gekoppelten Gleiter (20) mit dem Heckscheibenrahmen (8) verbunden ist, welches Kulissen (30, 31) mit in Kulissenlängsrichtung (37) versetztem und/oder zumindest bereichsweise unterschiedlichem Bahnverlauf (32, 33) aufweist, wobei der Gleiter (20) zwischen den Kulissen (30, 31) angeordnet ist.

4. Cabrioletfahrzeug nach Anspruch 3,
**dadurch gekennzeichnet,**
**dass** die Kulissen (30, 31) in Fahrzeugquerrichtung (36) nebeneinander angeordnet sind.

5. Cabrioletfahrzeug nach Anspruch 3 oder 4,
**dadurch gekennzeichnet,**
**dass** der Gleiter (20) verschiebbar und schwenkbar in jeder der Kulissen (30, 31) geführt und starr mit der Heckscheibe (9) verbunden ist.

6. Cabrioletfahrzeug nach einem der Ansprüche 3 bis 5,
**dadurch gekennzeichnet,**
**dass** die Heckscheibe (9) im Abstand zu dem Gleiter (20) mittels wenigstens einer zusätzlichen Kulissenführung (21) an dem Heckscheibenrahmen geführt ist.

7. Cabrioletfahrzeug nach einem der vorangehenden Ansprüche,
**dadurch gekennzeichnet,**
**dass** die Heckscheibe (9) mittels eines an dem Heckscheiberahmen (8) befestigten Antriebs (26) geöffnet und geschlossen werden kann.

## Claims

1. A convertible vehicle with a vehicle body (3), a folding top or convertible roof (2) movably supported on said vehicle body (3) and comprising a rear window frame (8) with a rear window (9) which is displaceable relative to the rear window frame (8) and is at least partly transparent,
**characterised in that** the rear window (9) is guided on the rear window frame (8) by means of a mechanical system (19, 20), which enables a short travel (14) of the rear window (9) relative to the rear window frame (8), followed by an outward and upward movement (18).

2. The convertible vehicle according to claim 1, **characterised in that** the rear window (9) can be pushed outwardly over the top or roof (2).

3. The convertible vehicle according to claim 1 or 2, **characterised in that** the rear window (9) is connected to the rear window frame (8) by at least one slider (20) which is guided by a pair of sliding-block guides (19) connected to the rear window frame (8), and coupled with the rear window (9), said pair of sliding-block guides (19) comprising sliding way rails (30, 31), whose path (32, 33) is offset and/or at least partly different in the sliding-way longitudinal direction (37), and the slider (20) being disposed between the sliding way rails (30, 31).

4. The convertible vehicle according to claim 3, **characterised in that** the sliding way rails (30, 31) are arranged next to each other in the transverse vehicle direction (36).

5. The convertible vehicle according to claim 3 or 4, **characterised in that** the slider (20) is guided in a displaceable and pivoting manner in each of the sliding way rails (30, 31) and is rigidly connected to the rear window (9).

6. The convertible vehicle according to any one of claims 3 to 5, **characterised in that** the rear window (9) is guided on the rear window frame, spaced apart from the slider (20), by means of at least one additional sliding-block guide (21).

7. The convertible vehicle according to any one of the preceding claims, **characterised in that** the rear window (9) can be opened and closed by means of a drive (26) fixed to the rear window frame (8).

## Revendications

1. Véhicule cabriolet, comprenant une carrosserie (3), une capote pliante ou un toit pliant (2) maintenu(e) de manière déplaçable sur ladite carrosserie (3) et présentant un cadre de lunette arrière (8) avec une lunette arrière (9) qui est déplaçable par rapport au cadre de lunette arrière (8) et au moins partiellement transparente,
**caractérisé en ce que** la lunette arrière (9) est guidée sur le cadre de lunette arrière (8) au moyen d'un système mécanique (19, 20), qui permet à la lunette arrière (9) une petite course (14) par rapport au cadre de lunette arrière (8), suivie d'un mouvement vers l'extérieur et vers le haut (18).

2. Véhicule cabriolet selon la revendication 1, **caractérisé en ce que** l'on peut pousser la lunette arrière (9) sur la capote ou le toit (2) à l'extérieur.

3. Véhicule cabriolet selon la revendication 1 ou 2, **caractérisé en ce que** la lunette arrière (9) est reliée au cadre de lunette arrière (8) par au moins un glisseur (20), guidé sur le cadre de lunette arrière (8) par une paire de guidages à coulisse (19) et couplé à la lunette arrière (9), ladite paire de guidages à coulisse (19) comprenant des coulisses (30, 31) avec une trajectoire (32, 33) déplacée et/ou au moins partiellement différente dans la direction longitudinale (37) des coulisses, et le glisseur (20) étant disposé entre les coulisses (30, 31).

4. Véhicule cabriolet selon la revendication 3, **caractérisé en ce que** les coulisses (30, 31) sont disposées l'une à côté de l'autre dans la direction transversale (36) du véhicule.

5. Véhicule cabriolet selon la revendication 3 ou 4, **caractérisé en ce que** le glisseur (20) est guidé d'une manière déplaçable et pivotante dans chacune des coulisses (30, 31) et est raccordé de manière rigide à la lunette arrière (9).

6. Véhicule cabriolet selon l'une quelconque des revendications 3 à 5, **caractérisé en ce que** la lunette arrière (9) est guidée sur le cadre de lunette arrière, écartée du glisseur (20), par au moins un guidage à coulisse (21) additionnel.

7. Véhicule cabriolet selon l'une quelconque des revendications précédentes, **caractérisé en ce que** l'on peut ouvrir et fermer la lunette arrière (9) au moyen d'un entraînement (26) monté sur le cadre de lunette arrière (8).
